# FASCICULE DE BREVET EUROPEEN

(11) **EP 0 786 845 B1**
(45) Date de publication et mention de la délivrance du brevet: **20.09.2000**
(21) Numéro de dépôt: 97400137.2
(22) Date de dépôt: 22.01.1997
(51) Int. Cl.: H02G 3/04

(54) **Gaine, notamment pour établissement hospitalier**
Umhüllungskanal, insbesondere für Krankenhauseinrichtung
Sheath, especially for hospital establishment

(30) Priorité: 23.01.1996 FR 9600712
(43) Date de publication de la demande: 30.07.1997
(73) Titulaire: LEGRAND, F-87045 Limoges Cédex (FR); LEGRAND SNC, F-87045 Limoges (FR)
(72) Inventeur: Geoffre, Alain, 87350 Panazol (FR)
(74) Mandataire: CABINET BONNET-THIRION

(56) Documents cités:
- DE-U- 29 506 542
- GB-A- 2 284 715
- US-A- 4 874 322
- US-A- 4 905 433

## Description

La présente invention concerne d'une manière générale les gaines, communément dites techniques, mises en oeuvre dans certains locaux pour le support et la desserte de divers blocs fonctionnels.

Cela est le cas, par exemple, de celles de ces gaines qui sont destinées à l'équipement d'un établissement hospitalier. Un exemple d'une telle gaine se retrouve dans le document US-A-4 905 433.

Du point de vue fonctionnel, et suivant les exigences initialement formulées, les gaines de ce type doivent par exemple regrouper divers blocs d'éclairage, tels que par exemple un bloc d'éclairage d'ambiance et/ou un bloc d'éclairage de lecture, divers blocs électriques, tels que par exemple un bloc comportant une prise de courant, et/ou une prise pour manipulateur, et/ou une prise de téléphone, et/ou des voyants et poussoirs pour circuits de signalisation, et, très souvent, au moins un bloc de connexion pour fluides médicaux.

Une telle gaine est usuellement rapportée sur un mur, en général horizontalement, et elle est formée d'éléments de profilé.

Elle est ainsi susceptible de s'étendre en continu sur une portée plus ou moins grande, en allant par exemple de l'un à l'autre des deux murs perpendiculaires à celui qui la porte, ou en formant au contraire de manière isolée une applique sur un tel mur.

De manière usuelle, également, les éléments de profilé formant une telle gaine définissent, longitudinalement, côte à côte, au moins deux compartiments, à savoir, un compartiment dit ci-après par simple commodité compartiment central et un compartiment dit ci-après par simple commodité compartiment latéral, pour permettre d'assurer une séparation convenable soit entre les conducteurs électriques porteurs de courant fort et ceux porteurs de courant faible, soit entre ces conducteurs électriques et les tubes prévus pour les fluides médicaux.

Une des difficultés à surmonter dans la réalisation des gaines de ce type tient précisément à la nécessité qu'il y a de disposer, de place en place, dans les éléments de profilé, d'évidements permettant localement le passage de tel ou tel de ces conducteurs électriques ou de tel ou tel de ces tubes, soit pour une communication d'un des compartiments à l'autre, soit pour une communication de ce compartiment avec l'un ou l'autre des blocs fonctionnels à desservir.

Intervenant transversalement, ces évidements contreviennent à l'allongement naturel des éléments de profilé, qui, usuellement, sont réalisés par extrusion.

Ils nécessitent, en pratique, une découpe locale de ces éléments de profilé, au prix d'une opération de reprise qui ne manque pas de compliquer, et de rendre plus coûteuse, l'installation de l'ensemble.

La présente invention a d'une manière générale pour objet une disposition permettant d'obvier à cette difficulté.

De manière plus précise, elle a pour objet une gaine, notamment pour établissement hospitalier, du genre formée d'éléments de profilé définissant, longitudinalement, côte à côte, au moins deux compartiments, à savoir, un compartiment central et un compartiment latéral, cette gaine étant d'une manière générale caractérisée en ce qu'elle comporte, en combinaison, d'une part, pour le compartiment central, au moins un élément de profilé continu, qui court sur toute sa longueur, et qui forme une embase pour ce compartiment central, et, d'autre part, pour le compartiment latéral, au moins deux éléments de profilé séparés, qui sont rapportés sur l'élément de profilé continu, le long de l'un des bords longitudinaux de celui-ci, et qui, l'un et l'autre de même profil, présentent chacun deux ailes, à savoir, une aile interne du côté de l'élément de profilé continu, et une aile externe du côté opposé au précédent, en coopération avec, pour le compartiment central, des moyens de fermeture, qui, intervenant entre l'aile interne des éléments de profilé séparés du compartiment latéral et l'autre des bords longitudinaux de l'élément de profilé continu, délimitent avec les éléments de profilé séparés et cet élément de profilé continu le compartiment central, et, pour le compartiment latéral, au moins un élément de fermeture, qui, rapporté sur les ailes des éléments de profilé séparés de ce compartiment latéral, de l'une à l'autre de ces ailes, délimite avec ces ailes ce compartiment latéral.

En bref, il est associé, suivant l'invention, des éléments de profilé continus et des éléments de profilé séparés, c'est-à-dire des éléments de profilé discontinus ou discrets.

Il peut ainsi être très simplement tiré profit des intervalles susceptibles d'être ménagés entre ces éléments de profilé séparés pour assurer localement toutes les communications nécessaires entre les compartiments ou entre ces compartiments et les divers blocs fonctionnels, sans qu'il soit nécessaire, pour ce faire, d'intervenir sur le ou les éléments de profilé continus mis en oeuvre par ailleurs.

Il en résulte, avantageusement, une grande simplicité de réalisation et une grande souplesse d'installation.

Préférentiellement, mais non nécessairement obligatoirement, les moyens de fermeture du compartiment central comportent, eux-mêmes, d'une part, le long du bord longitudinal de l'élément de profilé continu opposé au compartiment latéral, au moins deux éléments de profilé séparés qui définissent un deuxième compartiment latéral, et, d'autre part, au moins un élément de fermeture, qui, intervenant entre les éléments de profilé séparés du premier compartiment latéral et ceux du deuxième compartiment latéral, est rapporté sur les ailes internes de ces éléments de profilé séparés.

Ainsi, la gaine suivant l'invention peut avantageusement présenter un plan longitudinal de symétrie, au bénéfice de l'esthétique.

Préférentiellement, également, l'aile externe des éléments de profilé séparés mis en oeuvre suivant l'invention comporte, le long de son bord libre, un bourrelet de section transversale globalement circulaire, et, par une rainure de section transversale complémentaire, l'élément de fermeture associé au compartiment latéral correspondant est encliqueté à rotation sur ce bourrelet.

Cet élément de fermeture peut ainsi avantageusement intervenir à la manière d'un couvercle articulé par une charnière, ce qui permet d'avoir accès au compartiment latéral correspondant sans procéder à sa dépose, et ce qui facilite donc avantageusement cet accès.

De manière usuelle, la gaine suivant l'invention peut être mise en oeuvre isolément, à l'horizontale.

Mais, suivant l'invention, il peut également lui être adjoint, en T, si désiré, une gaine auxiliaire de même type, qui s'étend verticalement, et dont le volume interne communique avec son propre volume interne.

Il est ainsi avantageusement possible de procéder à un déport de certains au moins des blocs fonctionnels, et par exemple de certains au moins des blocs électriques, en rapprochant ainsi ces derniers de leur point d'utilisation, notamment lorsque l'ensemble intervient en tête de lit dans un établissement hospitalier.

Les caractéristiques et avantages de l'invention ressortiront d'ailleurs de la description qui va suivre, à titre d'exemple, en référence aux dessins schématiques annexés sur lesquels :
la figure 1 est une vue partielle en élévation d'une gaine suivant l'invention, qui est représentée en configuration de fermeture, et à laquelle il est associé une gaine auxiliaire;
la figure 2 est, avec des arrachements locaux, et de manière en partie éclatée, une vue partielle en perspective de cette gaine, représentée en configuration d'ouverture ;
la figure 3 est, à échelle supérieure, et suivant la ligne théorique III-III de la figure 1, une vue de bout de cette gaine, représentée vide ;
les figures 4, 5 et 6 reprennent, chacune respectivement, à échelle encore supérieure, les détails de la figure 3 repérés par des encarts IV, V et VI sur cette figure 3 ;
la figure 7 est une vue de bout qui, analogue à celle de la figure 3, illustre l'implantation de divers équipements dans la gaine suivant l'invention ;
la figure 8 est une vue de bout qui, reprenant pour partie celle de la figure 7, se rapporte, isolément, à un support mis en oeuvre dans la gaine suivant l'invention ;
les figures 9 et 10 sont des vues partielles de bout qui, analogues à celle de la figure 7, se rapportent, chacune respectivement, à d'autres équipements ;
la figure 11 est une vue partielle de bout, qui, analogue, elle aussi, à celle de la figure 3, se rapporte à une possibilité d'implantation pour un autre de ces équipements ;
la figure 12 est, suivant la ligne XII-XII de la figure 1, une vue en coupe transversale illustrant une autre possibilité d'implantation pour cet équipement ;
la figure 13 est, suivant la ligne XIII-XIII de la figure 1, une vue en coupe transversale de la gaine auxiliaire associée à la gaine suivant l'invention ;
la figure 14 est, à l'échelle de la figure 1, une vue en élévation qui, analogue à celle de cette figure 1, se rapporte à une utilisation en applique de cette gaine auxiliaire.

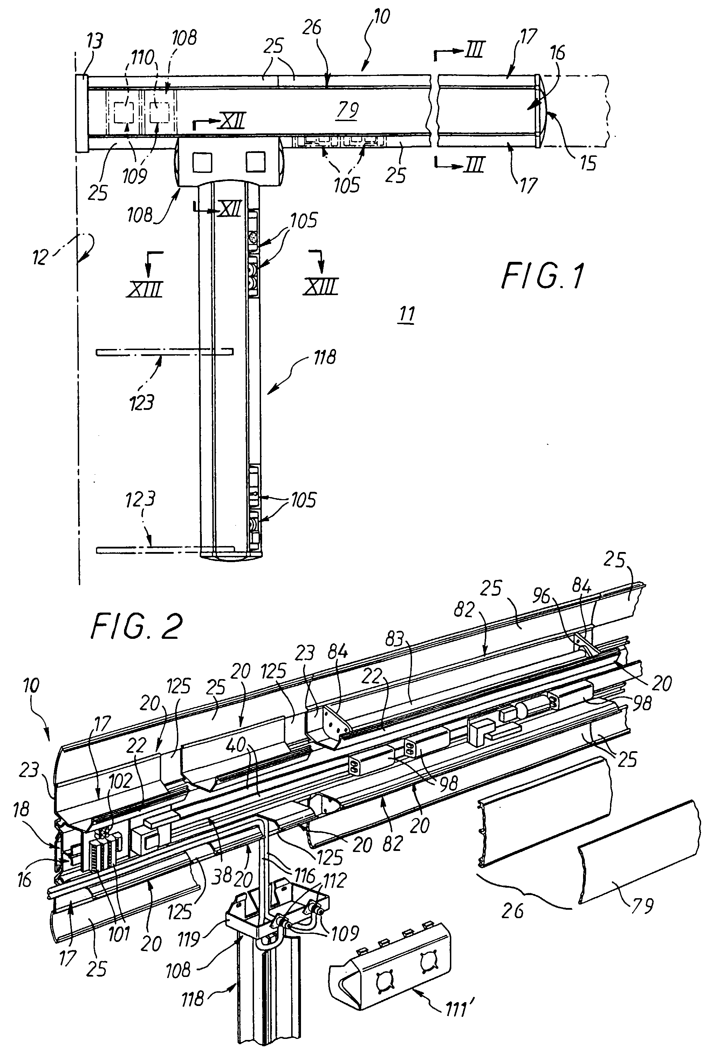

Dans la forme de mise en oeuvre représentée sur la figure 1, la gaine 10 suivant l'invention est rapportée à l'horizontale sur un mur 11, et elle s'étend en continu à compter d'un autre mur 12 perpendiculaire au précédent, avec, rapporté transversalement sur son extrémité correspondante, à son raccordement à ce mur 12, un capot de recouvrement 13.

Par exemple, et tel que représenté, la gaine 10 peut présenter, à distance du mur 12, une extrémité libre, et celle-ci est alors fermée par un embout 15.

En variante, la gaine 10 peut s'étendre en continu du mur 12 à un autre mur parallèle à celui-ci, avec un capot de recouvrement 13 à chacune de ses extrémités.

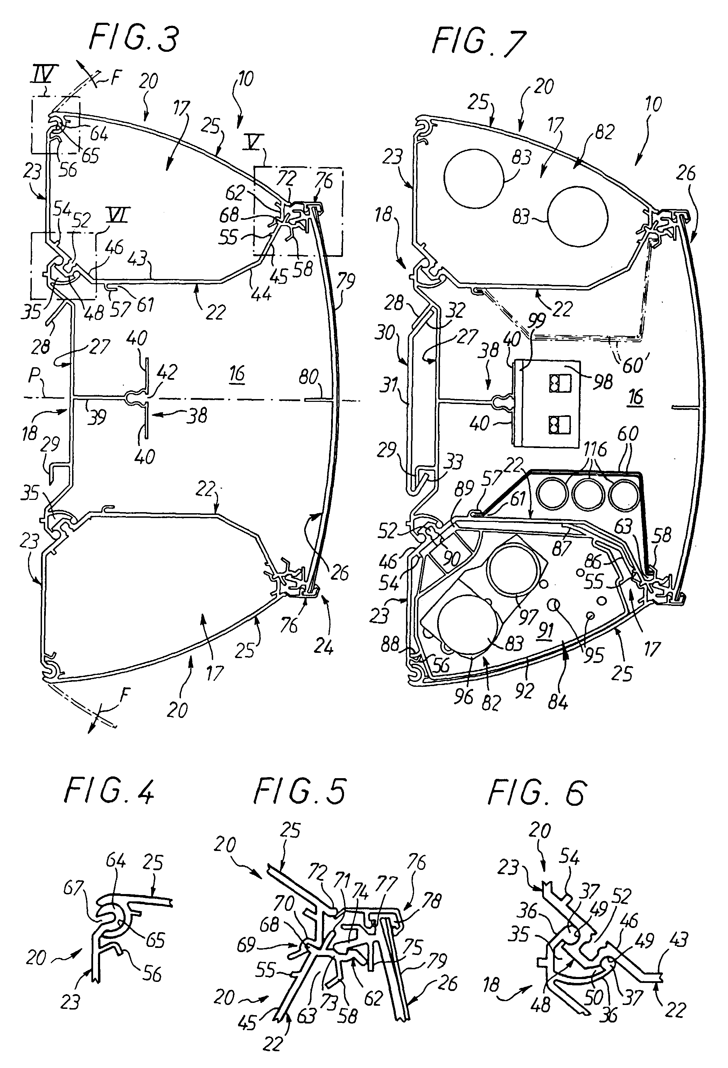

Globalement, et de manière connue en soi, la gaine 10 suivant l'invention est formée d'éléments de profilé définissant, longitudinalement, côte à côte, ainsi qu'il est mieux visible sur les figures 2 et 3, au moins deux compartiments 16, 17, à savoir, un compartiment 16, dit ici par simple commodité compartiment central, et un compartiment 17, dit ici par simple commodité compartiment latéral.

Suivant l'invention, la gaine 10 comporte, en combinaison, pour ce faire, d'une part, pour le compartiment central 16, au moins un élément de profilé continu 18, qui court sur toute sa longueur, et qui forme une embase pour ce compartiment central 16, et, d'autre part, pour le compartiment latéral 17, au moins deux éléments de profilé séparés 20, qui sont rapportés sur l'élément de profilé continu 18, le long de l'un des bords longitudinaux de celui-ci, à une distance éventuellement nulle l'un de l'autre, et qui, l'un et l'autre de même profil, présentent chacun deux ailes 22, 23, à savoir, une aile 22 interne, du côté de l'élément de profilé continu 18, et une aile 23 externe, du côté opposé au précédent, en coopération avec, pour le compartiment central 16, et suivant des dispositions décrites plus en détail ultérieurement, des moyens de fermeture 24, qui, intervenant entre l'aile 22 interne des éléments de profilé séparés 20 du compartiment latéral 17 et l'autre des bords longitudinaux de l'élément de profilé continu 18, délimitent avec ces éléments de profilé séparés 20 et cet élément de profilé continu 18 le compartiment central 16, et, pour le compartiment latéral 17, au moins un élément de fermeture 25, qui, rapporté sur les ailes 22, 23 des éléments de profilé séparés 20 de ce compartiment latéral 17, de l'une à l'autre de ces ailes 22, 23, délimite avec ces ailes 22, 23 ce compartiment latéral 17.

En pratique, dans la forme de réalisation représentée, les moyens de fermeture 24 du compartiment central 16 comportent, d'une part, le long du bord longitudinal de l'élément de profilé continu 18 opposé au compartiment latéral 17, au moins deux éléments de profilé séparés 20, qui définissent un deuxième compartiment latéral 17, et, d'autre part, au moins un élément de fermeture 26, qui, intervenant entre les éléments de profilé séparés 20 du premier compartiment latéral 17 et ceux du deuxième compartiment latéral 17, est rapporté sur les ailes 22 internes de ces éléments de profilé séparés 20.

Dans la forme de réalisation représentée, les deux compartiments latéraux 17 ont des profils identiques, et, d'une manière plus générale, ils sont symétriques l'un de l'autre.

La gaine 10 suivant l'invention a donc, dans cette forme de réalisation, un plan longitudinal de symétrie P.

Ce plan longitudinal de symétrie P est schématisé en traits interrompus, par sa trace, sur la figure 3.

Dans sa zone médiane, au moins, l'élément de profilé continu 18 forme, en creux, par rapport à sa surface externe, dans la forme de réalisation représentée, un dégagement 27, et, dans ce dégagement 27, il présente, en saillie, au moins une nervure 28, 29 propre à son crochetage sur une agrafe 30, figure 7.

En pratique, le dégagement 27 a un profil en trapèze, et, dans ce dégagement 27, l'élément de profilé continu 18 présente, en saillie, deux nervures 28, 29, l'une, 28, formée d'une simple lamelle oblique qui s'étend globalement vers le bas, l'autre, 29, qui, conformée en crochet, s'étend également globalement vers le bas.

Conjointement, l'agrafe 30 présente une platine 31, par laquelle elle est adaptée à être fixée au mur 11, par exemple par vissage, et, parallèlement l'une à l'autre, le long des bords longitudinaux de cette platine 31, deux pattes 32, 33, qui s'étendent globalement en oblique vers le haut, et avec lesquelles sont chacune respectivement en prise, par le dessus, les nervures 28, 29 de l'élément de profilé continu 18.

Bien entendu, plusieurs agrafes 30 sont ainsi prévues, de place en place, le long du mur 11, pour le support de l'élément de profilé continu 18, et, par l'intermédiaire de celui-ci, pour le support de l'ensemble de la gaine 10.

Le long de chacun de ses bords longitudinaux, l'élément de profilé continu 18 comporte une rainure 35 propre à l'encliquetage des éléments de profilé séparés 20 des compartiments latéraux 17.

Dans la forme de réalisation représentée, cette rainure 35 est globalement inclinée à 45° par rapport au plan général de l'élément de profilé continu 18.

Elle se trouve définie par deux ailes 36 qui présentent chacune un bourrelet arrondi 37 le long de leur bord libre, figure 6.

Dans la forme de réalisation représentée, l'élément de profilé continu 18 présente, enfin, en saillie sur sa surface interne, dans la zone médiane de celle-ci, une nervure 38 à section transversale en T.

Cette nervure 38 est avantageusement susceptible d'assumer diverses fonctions.

En effet, outre qu'elle fait office de raidisseur et de diffuseur thermique, elle est apte à servir de support à divers équipements, tant par son jambage 39 que par ses ailes latérales 40.

Par exemple, les conducteurs électriques, non représentés, à mettre en oeuvre, peuvent reposer, librement, sur son jambage 39.

En variante, ou conjointement, ses ailes latérales 40 peuvent recevoir, directement ou indirectement, d'autres équipements, suivant des modalités qui, au moins pour certains d'entre eux, seront décrites plus en détail ultérieurement.

Dans la forme de réalisation représentée, et pour des raisons qui apparaîtront également ultérieurement, les deux ailes latérales 40 de cette nervure 38 sont séparées l'une de l'autre par une rainure 42, qui, en pratique, s'approfondit sensiblement à la faveur d'un dédoublement local de l'extrémité correspondante du jambage 39.

Les éléments de profilé séparés 20 de l'un et de l'autre des compartiments latéraux 17 ont des longueurs variables, suivant notamment l'emprise longitudinale des blocs fonctionnels auxquels ils peuvent servir de logement, mais ils ont tous un même profil.

Dans la forme de réalisation représentée, leur aile 23 externe est globalement plane, et elle s'étend sensiblement suivant le plan général de l'élément de profilé continu 18.

Conjointement, leur aile 22 interne est, dans cette forme de réalisation, globalement cintrée, avec sa concavité tournée vers l'intérieur du compartiment latéral 17 correspondant.

Plus précisément, dans la forme de réalisation représentée, cette aile 22 interne présente successivement plusieurs pans, à savoir, un pan 43, qui est sensiblement perpendiculaire au plan général de l'élément de profilé continu 18, et deux pans 44, 45, qui sont l'un et l'autre obliques par rapport au pan 43 précédent, le pan 44 immédiatement adjacent à ce pan 43 formant avec celui-ci un premier angle de dièdre et le pan 45 suivant formant avec lui un deuxième angle de dièdre inférieur au premier.

Le volume intérieur du compartiment central 16 va ainsi en s'évasant à son débouché.

Au raccordement de leurs ailes 22, 23, les éléments de profilé séparés 20 comportent un pan médian 46 oblique par rapport au plan général de l'élément de profilé continu 18, avec, en saillie sur la surface externe de ce pan médian 46, dans la zone médiane de celui-ci, une nervure 48 propre à leur encliquetage sur l'élément de profilé continu 18.

A cet effet, figure 6, cette nervure 48 présente, à sa racine, deux gorges 49, qui ont l'une et l'autre un profil transversal arrondi, pour coopération avec les bourrelets arrondis 37 des ailes 36 de la rainure 35 correspondante de l'élément de profilé continu 18, et dont une, au moins, est précédée d'un chanfrein d'engagement 50.

Pour des raisons qui apparaîtront ci-après, les éléments de profilé séparés 20 comportent, corollairement, en creux, sur la surface interne de leur pan médian 46, dans la zone médiane de celle-ci, une rainure 52, qui, en pratique, s'approfondit sensiblement à la faveur de leur nervure 48.

Sur la surface interne des ailes 22, 23 des éléments de profilé séparés 20 interviennent, en saillie, dans la forme de réalisation représentée, diverses nervures, dont les fonctions seront explicitées ultérieurement.

Dans la forme de réalisation représentée, il y a ainsi, plus précisément, une nervure 54, qui fait saillie sur le pan médian 46, perpendiculairement à celui-ci, entre la rainure 52 de ce pan médian 46 et l'aile 23 externe, une nervure 55, qui fait saillie sur l'aile 22 interne, à proximité de son bord libre, et qui s'étend sensiblement perpendiculairement au plan général de l'élément de profilé continu 18, et une nervure 56, qui fait saillie sur l'aile 23 externe, à proximité du bord libre de celle-ci, et qui forme globalement un dièdre dont la concavité est tournée vers l'aile 22 interne.

Sur la surface externe de l'aile 22 interne des éléments de profilé séparés 20 interviennent également, en saillie, dans la forme de réalisation représentée, au moins deux nervures 57, 58, qui, disposées à distance l'une de l'autre, sont propres conjointement à la mise en place éventuelle d'une cloison 60 dans le compartiment central 16, tel que représenté à la figure 7.

La nervure 57, qui s'étend à proximité du pan médian 46, forme globalement un dièdre sensiblement droit, et elle constitue, ainsi, avec l'aile 22 interne sur laquelle elle fait saillie, une poche 61, dont la concavité est tournée du côté opposé à l'élément de profilé continu 18, et dans laquelle peut être inséré le bord longitudinal correspondant de la cloison 60.

La nervure 58 s'étend, elle, en saillie, sur un retour 62 que l'aile 22 interne présente en saillie vers l'extérieur le long de son bord libre, figures 3 et 5, et elle forme avec cette aile 22 interne une poche 63, dont la concavité est globalement tournée vers l'élément de profilé continu 18, et dans laquelle peut être inséré le bord longitudinal correspondant de la cloison 60.

Dans la forme de réalisation représentée, cette nervure 58 forme également un dièdre dont la concavité est tournée vers l'aile 22 interne.

Dans la forme de réalisation représentée, l'aile 23 externe des éléments de profilé séparés 20 comporte, le long de son bord libre, un bourrelet 64, de section transversale globalement circulaire, figures 3 et 4, et, par une rainure 65 de section transversale complémentaire, l'élément de fermeture 25 associé au compartiment latéral 17 concerné est encliqueté à rotation sur ce bourrelet 64, à la manière d'une charnière.

Pour son allégement, le bourrelet 64 est évidé par une fente 67 dont le débouché est tourné vers la surface externe de l'aile 23 externe.

Dans la forme de réalisation représentée, l'élément de fermeture 25 des compartiments latéraux 17 est également encliqueté sur l'aile 22 interne des éléments de profilé séparés 20, le long du bord libre de celle-ci, figures 3 et 5.

A cet effet, d'une part, l'aile 22 interne des éléments de profilé séparés 20 comporte, en saillie sur sa surface interne, une nervure 68, qui, en pratique, s'étend sensiblement en continuité avec son retour 62, et, d'autre part, l'élément de fermeture 25 présente, en saillie sur sa surface interne, à proximité de son bord longitudinal correspondant, une nervure 69, qui, localement, forme une déformation 70, en demi-onde, par laquelle elle peut venir élastiquement en prise avec la nervure 68 précédente.

Pour contrebuter la nervure 69 de l'élément de fermeture 25, l'aile 22 interne des éléments de profilé séparés 20 comporte, en V avec la nervure 68, une autre nervure 71, qui, en pratique, fait saillie sur le retour 62 de cette aile 22 interne, du côté opposé à la nervure 58.

Dans la forme de réalisation représentée, l'élément de fermeture 25 des compartiments latéraux 17 est légèrement cintré, et, au-delà de sa nervure 69, il présente un prolongement 72.

Cet élément de fermeture 25 peut être opaque, en étant par exemple en matière synthétique ou en métal, notamment en aluminium, et il constitue alors un enjoliveur.

En variante, cet élément de fermeture 25 peut être translucide, en étant par exemple réalisé en polycarbonate, et il constitue alors un diffuseur, lorsque, tel que décrit plus en détail ultérieurement, le bloc fonctionnel sous-jacent est un bloc d'éclairage.

Dans tous les cas, la longueur de cet élément de fermeture 25 n'est pas nécessairement liée à celle des éléments de profilé séparés 20.

Au contraire, et notamment lorsqu'il s'agit d'un enjoliveur, cet élément de fermeture 25 peut, si désiré, s'étendre sur toute la longueur de la gaine 10.

Dans tous les cas, également, et tel que schématisé en traits interrompus et par une flèche F sur la figure 3, l'élément de fermeture 25 des compartiments latéraux 17 peut avantageusement être ouvert à la manière d'un couvercle, en donnant ainsi accès à ces compartiments latéraux 17 sans être déposé.

L'élément de fermeture 26 du compartiment central 16 est lui aussi légèrement cintré dans la forme de réalisation représentée, et, lui aussi, il peut s'étendre, si désiré, sur toute la longueur de la gaine 10.

Dans la forme de réalisation représentée, cet élément de fermeture 26 est encliqueté, le long de chacun de ses bords longitudinaux, sur les ailes 22 internes des éléments de profilé séparés 20 des compartiments latéraux 17, à la faveur du retour 62 de celles-ci.

A cet effet, ce retour 62 présente, localement, une déformation 73, en demi-onde, et, conjointement, l'élément de fermeture 25 présente, en saillie sur sa surface interne, le long de chacun de ses bords longitudinaux, une nervure 74, qui, le long de son bord libre, est conformée en crochet.

Corollairement, sur cette nervure 74, fait saillie, vers l'intérieur, une languette 75, pour venir en appui sur l'extrémité libre du retour 62 des ailes 22 internes des éléments de profilé séparés 20.

Dans la forme de réalisation représentée, le long de l'un au moins des bords longitudinaux de l'élément de fermeture 26 du compartiment central 16, et, en pratique, le long de chacun de ceux-ci, est rapporté un jonc de recouvrement 76, qui s'étend transversalement de cet élément de fermeture 26 à l'élément de fermeture 25 du compartiment latéral 17 proche.

Pour ce faire, chacun des bords longitudinaux de l'élément de fermeture 26 présente, sur sa surface interne, un épaulement 77, et il forme, en saillie sur sa surface externe, un crochet 78, pour l'encliquetage du jonc de recouvrement 76 correspondant.

Dans la forme de réalisation représentée, les crochets 78 que présente ainsi en saillie vers l'extérieur l'élément de fermeture 26 sont en outre mis à profit pour incorporer en surface à celui-ci, si désiré, une quelconque plaque de recouvrement 79 susceptible de porter un quelconque décor ou servant elle-même de décor.

Enfin, dans la forme de réalisation représentée, l'élément de fermeture 26 du compartiment central 16 est supposé être en métal, et il présente, en saillie sur sa surface interne, dans la zone médiane de celle-ci, une nervure 80, pour son éventuelle mise à la masse.

Comme l'élément de fermeture 26, les joncs de recouvrement 76 et la plaque de recouvrement 79 peuvent avantageusement s'étendre si désiré sur toute la longueur de la gaine 10.

La gaine 10 ainsi constituée est susceptible de permettre la mise en oeuvre d'un certain nombre de blocs fonctionnels.

Il y a tout d'abord un ou plusieurs blocs d'éclairage 82, figures 2 et 7.

En pratique, ce ou ces blocs d'éclairage 82 sont disposés dans les compartiments latéraux 17.

Lorsqu'un tel bloc d'éclairage 82 est disposé dans le compartiment latéral 17 supérieur, il assure un éclairage d'ambiance, et, lorsqu'il est disposé dans le compartiment latéral 17 inférieur, il assure un éclairage de lecture.

Par exemple, et tel que représenté, un tel bloc d'éclairage 82 comporte un ou deux tubes fluorescents 83.

Pour le support de ces tubes fluorescents 83, l'un des éléments de profilé séparés 20, de longueur appropriée, est équipé intérieurement d'au moins un support 84, qui s'y étend transversalement, de l'une à l'autre de ses ailes 22, 23.

En pratique, deux supports 84 sont prévus, parallèlement l'un à l'autre, à distance l'un de l'autre, au voisinage, chacun respectivement, des extrémités de l'élément de profilé séparé 20 concerné.

Pour son maintien, un tel support 84 est en prise avec au moins l'une des nervures 54, 55, 56 de cet élément de profilé séparé 20.

Dans la forme de réalisation représentée, le support 84 présente, en saillie sur sa tranche, au moins une patte élastiquement déformable 86.

En pratique, il présente, dos à dos, deux pattes élastiquement déformables 86, 87, à savoir, une patte 86, par laquelle il est en prise avec la nervure 55 de l'élément de profilé séparé 20 concerné, et une patte 87, par laquelle il porte simplement sur l'aile 22 interne de cet élément de profilé séparé 20.

Dans la forme de réalisation représentée, le support 84 présente, en outre, en saillie sur sa tranche, une languette 88, par laquelle il est en prise avec la nervure 56 de l'élément de profilé séparé 20 concerné.

Enfin, dans la forme de réalisation représentée, le support 84 comporte, latéralement, au moins une patte 89, par laquelle, si désiré, il peut être assujetti au pan médian 46 de l'élément de profilé 20 séparé.

En pratique, le support 84 présente, longitudinalement, dos à dos, deux pattes 89, qui, pour le passage d'un quelconque moyen de fixation, tel que vis, présentent chacune un évidement 90 en correspondance avec la rainure 52 du pan médian 46 de l'élément de profilé séparé 20 concerné, et par lesquelles il est corollairement en appui contre la nervure 54 de ce pan médian 46.

Par exemple, l'évidement 90 est une simple encoche.

Quoi qu'il en soit, il permet au moyen de fixation correspondant de venir en prise avec la rainure 52 du pan médian 46 de l'élément de profilé séparé 20.

Dans la forme de réalisation représentée, le support 84 comporte, dans sa partie courante, une platine 91, qui, à sa périphérie, est bordée par un rebord 92 à compter duquel s'étendent les pattes élastiquement déformables 86, 87 et la languette 88, et qui, par une structure 93 renforcée par des nervures 94, est reliée aux pattes 89.

La platine 91 est ajourée, de place en place, par des perçages 95 propres au prépositionnement de divers équipements, tels que, par exemple, les douilles 96 nécessaires au support des tubes fluorescents 83 et le starter 97 associé à chacun de ces tubes fluorescents 83.

Le rebord 92 s'étend perpendiculairement à la platine 91, de part et d'autre de celle-ci.

Il en est de même pour les pattes élastiquement déformables 86, 87 et pour la languette 88.

Dans la forme de réalisation représentée, le support 84 forme une pièce d'un seul tenant, et celle-ci est par exemple réalisée en matière synthétique, telle que polyamide ou autre.

Dans la forme de réalisation représentée, et ainsi qu'il est mieux visible sur les figures 2 et 7, les ballasts 98 associés aux tubes fluorescents 83 sont disposés, eux, dans le compartiment central 16, en étant rapportés sur les ailes latérales 40 de la nervure 38 de l'élément de profilé continu 18.

Par exemple, et ainsi qu'il est mieux visible sur la figure 7, chacun de ces ballasts 98 est porté par une semelle 99, qui, à l'aide de vis, non représentées, est fixée à cette nervure 38, à la faveur de la rainure 42 intervenant entre ses ailes latérales 40.

Ainsi disposés dans un compartiment distinct de ceux dans lesquels se trouvent les tubes fluorescents 83, les ballasts 98, qui dégagent inévitablement de la chaleur, ménagent ces tubes fluorescents 83 et permettent d'avoir accès à ceux-ci sans risque d'un quelconque contact avec eux.

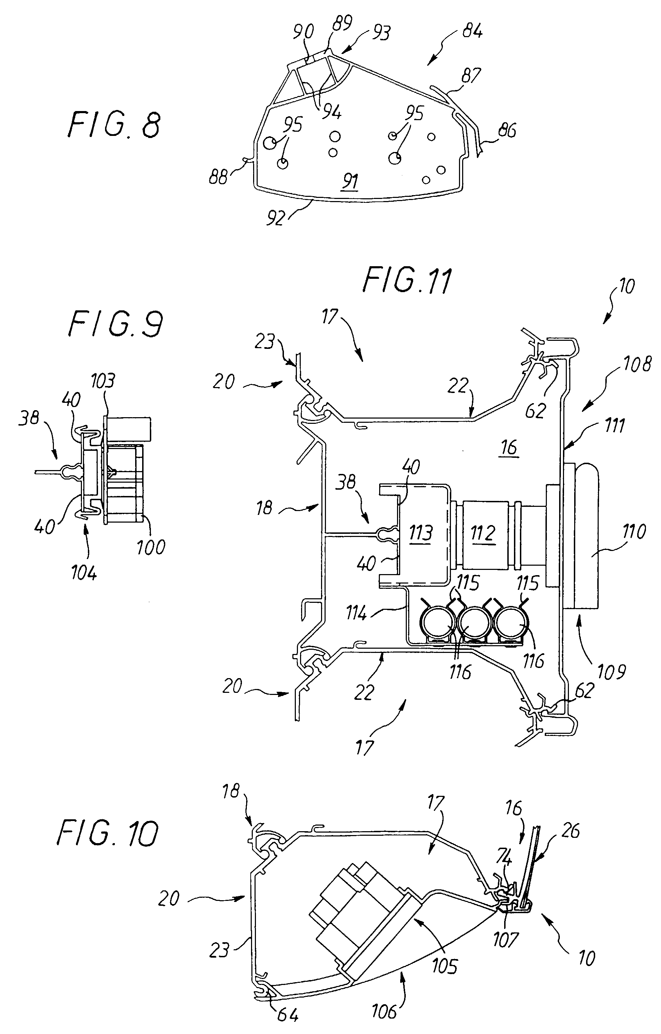

Ainsi qu'il est mieux visible sur les figures 2 et 9, d'autres équipements, et, par exemple, des connecteurs de dérivation 100, des borniers d'alimentation 101 pour courant faible, et des borniers d'alimentation 102 pour courant fort, peuvent également être rapportés sur la nervure 38 de l'élément de profilé continu 18, à la faveur des ailes latérales 40 de celui-ci.

Par exemple, et tel que représenté pour l'un d'eux à la figure 9, ces équipements sont, isolément, ou en groupe, portés par une carte de support 103, et celle-ci est elle-même solidarisée, par exemple par encliquetage, à un support 104 apte à être rapporté, également par encliquetage, sur les ailes latérales 40 de la nervure 38.

L'un ou l'autre des compartiments latéraux 17 peut également être mis à profit pour l'implantation d'un quelconque bloc électrique 105, et, plus généralement, il s'agit du compartiment latéral 17 inférieur, tel que schématisé en traits interrompus sur la figure 1, et tel que représenté plus complètement à la figure 10.

Par exemple, ce bloc électrique 105 peut comporter un ou plusieurs appareils, tels que prise de courant, prise de téléphone, interrupteur, poussoir, voyant ou autre.

Quoi qu'il en soit, pour le support de ce bloc électrique 105, il est substitué, localement, à l'élément de fermeture 25 correspondant, un plastron 106, qui, comme cet élément de fermeture 25, s'articule, d'un côté, sur le bourrelet 64 de l'aile 23 externe de l'élément de profilé séparé 20 concerné, et qui, de l'autre côté, est en prise avec l'élément de fermeture 26 du compartiment central 16, à la faveur d'une lamelle 107 doublant à cet effet la nervure 74 correspondante de cet élément de fermeture 25, parallèlement à cette nervure 74, à distance de celle-ci.

Tel que schématisé en traits interrompus sur la figure 1, et tel que représenté plus complètement à la figure 11, le compartiment central 16 de la gaine 10 suivant l'invention peut également être mis à profit pour l'implantation d'un bloc de connexion 108 pour fluides médicaux.

Par exemple, et tel que représenté, les prises de fluide 109 correspondantes, qui, chacune individuellement, sont protégées par un couvercle 110 à leur débouché, font saillie à la surface d'un plastron 111, qui, localement, est substitué à l'élément de fermeture 26 de ce compartiment central 16, en étant, comme celui-ci, encliqueté sur le retour 62 des ailes 22 internes des éléments de profilé séparés 20 des compartiments latéraux 17.

Dans la forme de réalisation représentée, le corps 112 de ces prises de fluide 109 est porté par un support 113 qui, suivant des conditions du même type que les précédentes, est dûment assujetti à la nervure 38 de l'élément de profilé continu 18, à la faveur des ailes latérales 40 de cette nervure 38, et sur lequel est par ailleurs rapportée une potence 114 présentant de place en place des agrafes 115, en forme de lyre, pour l'encliquetage local des tubes 116 véhiculant les fluides médicaux concernés.

De préférence, et ainsi qu'il est visible sur la figure 7, ces tubes 116 sont au moins localement isolés du reste du volume intérieur du compartiment central 16 par des cloisons 60.

Ces cloisons 60, de longueur variable, peuvent, comme représenté, se chevaucher l'une l'autre à leurs extrémités, pour plus de continuité.

Elle protègent avantageusement les tubes 116 du rayonnement thermique dû aux ballasts 98.

Tel que schématisé en traits interrompus sur la figure 7, des cloisons 60' de même type peuvent également être mises en oeuvre au dos de l'aile interne 22 des éléments de profilé séparés 20 de l'autre compartiment latéral 17 pour l'isolation et la protection d'éventuels conducteurs électriques non représentés.

La gaine 10 suivant l'invention peut être mise en oeuvre isolément, à l'horizontale, comme précédemment indiqué.

Cependant, dans la forme de mise en oeuvre représentée sur les figures 1 à 12, il lui est adjoint, en T, une gaine auxiliaire 118, de même type, qui s'étend verticalement, et dont le volume interne communique avec son propre volume interne.

En outre, dans la forme de mise en oeuvre représentée, c'est au raccordement entre la gaine 10 et la gaine auxiliaire 118 qu'intervient, à titre d'exemple, le bloc de connexion 108 pour fluides médicaux.

Il est prévu, à cet effet, une patère 119, qui porte le corps 112 des prises de fluide 109, et qui est fixée au mur 11, par exemple par vissage.

Un plastron 111', encliqueté sur la nervure 68 de l'aile 22 interne de l'élément de profilé séparé 20 correspondant, et fixé par ailleurs à la patère 119, constitue, en façade, un boîtier d'interface entre la gaine 10 et la gaine auxiliaire 118.

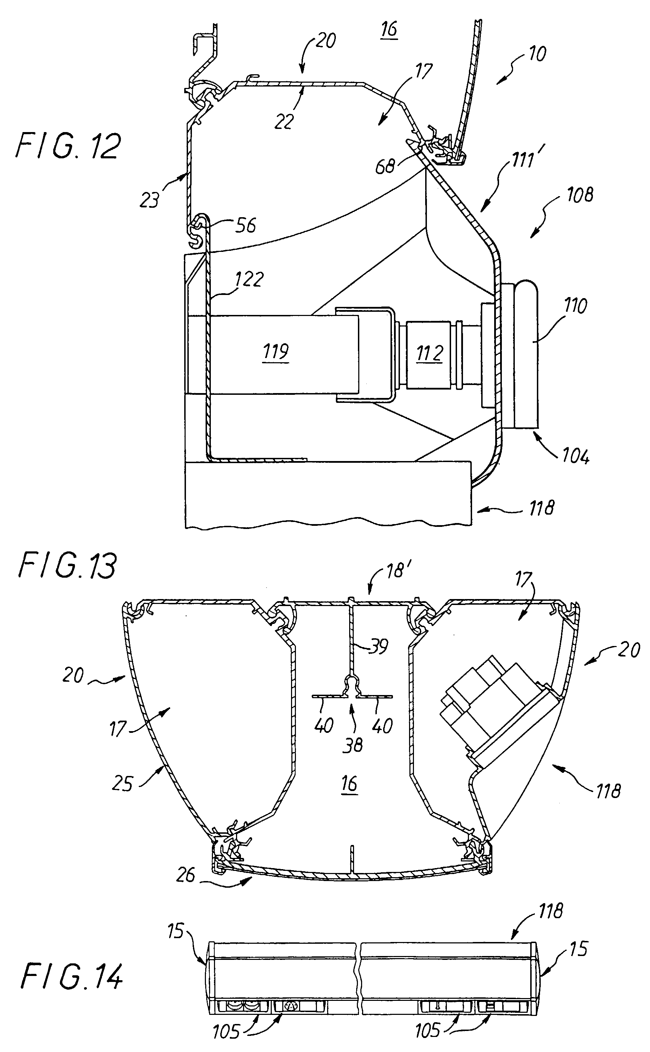

Ainsi qu'il est mieux visible sur la figure 13, cette gaine auxiliaire 118 a une structure, à compartiment central 16 et compartiments latéraux 17, similaire à celle de la gaine 10.

En particulier, les éléments de profilé séparés 20 qu'elle met en oeuvre sont les mêmes que ceux de cette dernière.

Cependant, l'élément de profilé continu 18' de la gaine auxiliaire 118 a une largeur moindre que l'élément de profilé continu 18 de la gaine 10, et il est dépourvu de dégagement à son dos.

Conjointement, le compartiment central 16 de cette gaine auxiliaire 118 a lui-même une largeur moindre, et, par voie de conséquence, il en est de même de son élément de fermeture 26.

Mais, pour le reste, les dispositions sont en tout point identiques à celles précédemment décrites.

En pratique, pour son maintien, la gaine auxiliaire 118 est, d'une part, suspendue, par un crochet 122, figure 12, à l'élément de profilé séparé 20 concerné de la gaine 10, à la faveur de la nervure 56 de l'aile 23 externe de cet élément de profilé séparé 20, et, d'autre part, elle est fixée de place en place, par vissage, au mur 11, des perçages, non visibles sur la figure, étant prévus à cet effet le long de son élément de profilé continu 18'.

Tel que visible à la figure 1, la gaine auxiliaire 118 permet avantageusement un déport local de certains au moins des blocs électriques 105.

Tel que schématisé en traits interrompus sur cette figure 1, elle se prête par ailleurs avantageusement à l'implantation d'une quelconque tablette 123, à la hauteur souhaitée pour celle-ci.

Par exemple, et tel que schématisé, cette tablette 123 peut intervenir à la base de la gaine auxiliaire 118 ou à mi-hauteur de celle-ci.

Qu'il s'agisse de la gaine 10 ou qu'il s'agisse de la gaine auxiliaire 118, les éléments de profilé séparés 20 peuvent, avantageusement, si désiré, être disposés à une distance non nulle les uns des autres sans que, eu égard à la continuité des éléments de fermeture 25, 26, il n'en apparaisse rien à l'extérieur.

Tel que représenté sur la figure 2, ces éléments de profilé séparés 20 définissent alors avantageusement entre eux des intervalles 125 qui assurent une communication entre le compartiment central 16 et l'un ou l'autre des compartiments latéraux 17, et dont un au moins assure également une communication entre la gaine 10 et la gaine auxiliaire 118.

Ces intervalles 125 peuvent ainsi être mis à profit pour le passage des conducteurs électriques, non représentés, qui, portés, comme précédemment indiqué, par le jambage 39 de la nervure 38 de l'élément de profilé continu 18 du compartiment central 16 de la gaine 10, sont nécessaires à la desserte des blocs d'éclairage 82 et des blocs électriques 105 logés dans les compartiments latéraux 17 de celle-ci.

Lorsque, pour la constitution de ces conducteurs électriques, il est utilisé des cordons prééquipés, qui, de longueur déterminée, sont raccordés à leur extrémité aux borniers d'alimentation 101, 102 situés dans le compartiment central 16 de cette gaine 10, les intervalles 125 entre les éléments de profilé séparés 20 des compartiments latéraux 17 permettent également de loger en boucle dans ces derniers l'éventuelle longueur en surplus de ces cordons.

De même, les tubes 116 véhiculant les fluides médicaux peuvent emprunter si nécessaire ces intervalles 125, ce qui permet de faciliter au mieux leur installation.

Tel est le cas, notamment, dans la forme de mise en oeuvre illustrée à la figure 2, suivant laquelle ces tubes 116 passent de la gaine 10 au bloc de connexion 108 pour fluides médicaux sous-jacent à la faveur d'un tel intervalle 125.

Il va de soi, également, que, si désiré, les éléments de profilé séparés 20, ou au moins certains d'entre eux, peuvent être jointifs.

Dans un tel cas, la "distance" qui les sépare est nulle.

Par ailleurs, dans la forme de mise en oeuvre illustrée par la figure 14, la gaine auxiliaire 118, qui est aussi une gaine suivant l'invention dans la mesure où elle reprend, comme indiqué, les dispositions de la gaine 10, est mise en oeuvre isolément, en applique, contre le mur 11, avec un embout 15 à chacune de ses extrémités.

Bien entendu, la présente invention ne se limite pas aux formes de réalisation et de mise en oeuvre décrites et représentées, mais englobe toute variante d'exécution.

En particulier, la gaine suivant l'invention peut ne comporter qu'un compartiment latéral.

Dans ce cas, les moyens de fermeture du compartiment central du côté opposé à ce compartiment latéral peuvent par exemple mettre en oeuvre une quelconque aile, qui peut par exemple venir d'un seul tenant de l'élément de profilé continu formant l'embase de ce compartiment central, ou qui peut également être d'un seul tenant avec l'élément de fermeture décrit et représenté, en étant alors par exemple sensiblement en équerre avec cet élément de profilé continu ou cet élément de fermeture, mais qui peut également se répartir entre ces deux éléments ou former une pièce distincte de l'un et de l'autre de ceux-ci.

Par ailleurs, au lieu d'être équipés d'un ou plusieurs tubes fluorescents, le ou les blocs d'éclairage mis en oeuvre peuvent tout aussi bien être équipés d'une ou plusieurs ampoules, et, par exemple, d'une ou plusieurs ampoules fluorescentes.

## Revendications

1. Gaine, notamment pour établissement hospitalier, du genre formée d'éléments de profilé définissant, longitudinalement, côte à côte, au moins deux compartiments, à savoir, un compartiment dit ci-après compartiment central (16) et un compartiment dit ci-après compartiment latéral (17), caractérisée en ce qu'elle comporte, en combinaison, d'une part, pour le compartiment central (16), au moins un élément de profilé continu (18), qui court sur toute sa longueur, et qui forme une embase pour ce compartiment central (16), et, d'autre part, pour le compartiment latéral (17), au moins deux éléments de profilé séparés (20), qui sont rapportés sur l'élément de profilé continu (18), le long de l'un des bords longitudinaux de celui-ci, et qui, l'un et l'autre de même profil, présentent chacun deux ailes (22, 23), à savoir, une aile (22) interne du côté de l'élément de profilé continu (18), et une aile (23) externe du côté opposé au précédent, en coopération avec, pour le compartiment central (16), des moyens de fermeture (24), qui, intervenant entre l'aile (22) interne des éléments de profilé séparés (20) du compartiment latéral (17) et l'autre des bords longitudinaux de l'élément de profilé continu (18), délimitent avec ces éléments de profilé séparés (20) et cet élément de profilé continu (18) le compartiment central (16), et, pour le compartiment latéral (17), au moins un élément de fermeture (25), qui, rapporté sur les ailes (22, 23) des éléments de profilé séparés (20) de ce compartiment latéral (17), de l'une à l'autre de ces ailes (22, 23), délimite avec ces ailes (22, 23) ce compartiment latéral (17).

2. Gaine suivant la revendication 1, caractérisée en ce que, le long d'un bord longitudinal, l'élément de profilé continu (18) comporte une rainure (35) propre à l'encliquetage des éléments de profilé séparés (20) du compartiment latéral (17).

3. Gaine suivant la revendication 2, caractérisée en ce que ladite rainure (35) est globalement inclinée à 45° par rapport au plan général de l'élément de profilé continu (18).

4. Gaine suivant l'une quelconque des revendications 1 à 3, caractérisée en ce que l'élément de profilé continu (18) présente, en saillie sur sa surface interne, dans la zone médiane de celle-ci, une nervure (38) à section transversale en T.

5. Gaine suivant la revendication 4, caractérisée en ce que les deux ailes latérales (40) de ladite nervure (38) sont séparées l'une de l'autre par une rainure (42).

6. Gaine suivant l'une quelconque des revendications 1 à 5, caractérisée en ce que, dans sa zone médiane, au moins, l'élément de profilé continu (18) forme, en creux, par rapport à sa surface externe, un dégagement (27), et, dans ce dégagement (27), il présente en saillie au moins une nervure (28, 29) propre à son crochetage sur une agrafe (30).

7. Gaine suivant la revendication 6, caractérisée en ce que, dans le dégagement (27) qu'il forme, l'élément de profilé continu (18) présente en saillie deux nervures (28, 29), l'une (28) formée d'une simple lamelle oblique, l'autre (29) conformée en crochet.

8. Gaine suivant l'une quelconque des revendications 1 à 7, caractérisée en ce que l'aile (23) externe des éléments de profilé séparés (20) est globalement plane et s'étend sensiblement suivant le plan général de l'élément de profilé continu (18).

9. Gaine suivant l'une quelconque des revendications 1 à 8, caractérisée en ce que l'aile (22) interne des éléments de profilé séparés (20) est globalement cintrée, avec sa concavité tournée vers l'intérieur du compartiment latéral (17).

10. Gaine suivant l'une quelconque des revendications 1 à 9, caractérisée en ce que, au raccordement de leurs ailes (22, 23), les éléments de profilé séparés (20) comportent un pan médian (46) oblique par rapport au plan général de l'élément de profilé continu (18), avec, en saillie sur la surface externe de ce pan médian (46), une nervure (48) propre à leur encliquetage sur l'élément de profilé continu (18).

11. Gaine suivant la revendication 10, caractérisée en ce que les éléments de profilé séparés (20) comportent, en creux, sur la surface interne de leur pan médian (46), une rainure (52).

12. Gaine suivant l'une quelconque des revendications 1 à 11, caractérisée en ce que, sur la surface interne des ailes (22, 23) des éléments de profilé séparés (20), interviennent en saillie diverses nervures (54, 55, 56).

13. Gaine suivant l'une quelconque des revendications 1 à 12, caractérisée en ce que, sur la surface externe de l'aile (22) interne des éléments de profilé séparés (20), interviennent, en saillie, à distance l'une de l'autre, au moins deux nervures (57, 58) propres à la mise en place éventuelle d'une cloison (60) dans le compartiment central (16).

14. Gaine suivant l'une quelconque des revendications 1 à 13, caractérisée en ce que l'aile (23) externe des éléments de profilé séparés (20) comporte, le long de son bord libre, un bourrelet (64), de section transversale globalement circulaire, et, par une rainure (65) de section transversale complémentaire, l'élément de fermeture (25) associé est encliqueté à rotation sur ledit bourrelet (64).

15. Gaine suivant la revendication 14, caractérisée en ce que l'élément de fermeture (25) du compartiment latéral (17) est également encliqueté sur l'aile (22) interne des éléments de profilé séparés (20), le long du bord libre de celle-ci.

16. Gaine suivant l'une quelconque des revendications 1 à 15, caractérisée en ce que l'un des éléments de profilé séparés (20) est équipé intérieurement d'au moins un support (84), qui s'y étend transversalement.

17. Gaine suivant les revendications 12 et 16, prises conjointement, caractérisée en ce que, pour son maintien, ledit support (84) est en prise avec au moins une nervure (54, 55, 56) de l'élément de profilé séparé (20).

18. Gaine suivant la revendication 17, caractérisée en ce que le support (84) présente, en saillie sur sa tranche, au moins une patte élastiquement déformable (86) par laquelle il est en prise avec une nervure (55) de l'élément de profilé séparé (20).

19. Gaine suivant les revendications 11 et 16, prises conjointement, caractérisée en ce que le support (84) comporte, latéralement, au moins une patte (89) par laquelle il peut être assujetti au pan médian (46) de l'élément de profilé séparé (20).

20. Gaine suivant l'une quelconque des revendications 1 à 19, caractérisée en ce que les moyens de fermeture (24) du compartiment central (16) comportent, d'une part, le long du bord longitudinal de l'élément de profilé continu (18) opposé au compartiment latéral (17), au moins deux éléments de profilé séparés (20) qui définissent un deuxième compartiment latéral (17), et, d'autre part, au moins un élément de fermeture (26), qui, intervenant entre les éléments de profilé séparés (20) du premier compartiment latéral (17) et ceux du deuxième compartiment latéral (17), est rapporté sur les ailes (22) internes de ces éléments de profilé séparés (20).

21. Gaine suivant la revendication 20, caractérisée en ce que les deux compartiments latéraux (17) sont symétriques l'un de l'autre.

22. Gaine suivant l'une quelconque des revendications 20, 21, caractérisée en ce que, le long de l'un au moins des bords longitudinaux de l'élément de fermeture (26) du compartiment central (16), est rapporté un jonc de recouvrement (76), qui s'étend transversalement de cet élément de fermeture (26) à l'élément de fermeture (25) du compartiment latéral (17) proche.

23. Gaine suivant l'une quelconque des revendications 1 à 22, caractérisée en ce qu'elle est mise en oeuvre isolément à l'horizontale.

24. Gaine suivant l'une quelconque des revendications 1 à 12, caractérisée en ce que, pour le déport d'au moins un bloc électrique (105), il lui est adjoint, en T, une gaine auxiliaire (118) de même type, qui s'étend verticalement, et dont le volume interne communique avec son propre volume interne.

## Patentansprüche

1. Umhüllungskanal insbesondere für Krankenhauseinrichtung, bestehend aus Profilelementen, die in Längsrichtung nebeneinander mindestens zwei Kammern abgrenzen, und zwar eine im nachstehenden Mittelkammer (16) und eine im nachstehenden Seitenkammer (17) genannte Kammer, dadurch gekennzeichnet, daß er in Kombination einerseits für die Mittelkammer (16) mindestens ein durchgehendes Profilelement (18) besitzt, das über ihre ganze Länge läuft und einen Boden für diese Mittelkammer (16) bildet, und andererseits für die Seitenkammer (17) mindestens zwei getrennte Profilelemente (20), die an dem durchgehenden Profilelement (18) längs eines seiner Längsränder angebracht sind und die, beide vom selben Profil, jeweils zwei Wangen (22, 23) aufweisen, und zwar eine Innenwange (22) auf der Seite des durchgehenden Profilelements (18) und eine Außenwange (23) auf der dieser Seite entgegengesetzten Seite, in Zusammenwirkung mit Verschlußmitteln (24) für die Mittelkammer (16), die zwischen der Innenwange (22) der getrennten Profilelemente (20) der Seitenkammer (17) und dem anderen Längsrand des durchgehenden Profilelements (18) vorgesehen sind und mit diesen getrennten Profilelementen (20) und diesem durchgehenden Profilelement (18) die Mittelkammer (16) abgrenzen, und mit mindestens einem Verschlußelement (25) für die Seitenkammer (17), das an den Wangen (22, 23) der getrennten Profilelemente (20) dieser Seitenkammer (17) von einer dieser Wangen (22, 23) zur anderen angebracht ist und das mit diesen Wangen (22, 23) die Seitenkammer (17) abgrenzt.

2. Umhüllungskanal nach Anspruch 1, dadurch gekennzeichnet, daß das durchgehende Profilelement (18) längs eines Längsrands eine Nut (35) zum Einrasten der getrennten Profilelemente (20) der Seitenkammer (17) aufweist.

3. Umhüllungskanal nach Anspruch 2, dadurch gekennzeichnet, daß die Nut (35) allgemein um 45° gegen die Hauptebene des durchgehenden Profilelements (18) geneigt ist.

4. Umhüllungskanal nach einem der Ansprüche 1 bis 3, dadurch gekennzeichnet, daß das durchgehende Profilelement (18) auf seiner Innenfläche vorstehend in deren mittlerem Bereich eine Rippe (38) mit T-förmigem Querschnitt aufweist.

5. Umhüllungskanal nach Anspruch 4, dadurch gekennzeichnet, daß die beiden seitlichen Schenkel (40) der Rippe (38) durch eine Nut (42) voneinander getrennt sind.

6. Umhüllungskanal nach einem der Ansprüche 1 bis 5, dadurch gekennzeichnet, daß das durchgehende Profilelement (18) zumindest in seinem mittleren Bereich bezüglich seiner Außenfläche vertieft eine Abstufung (27) bildet und in dieser Abstufung (27) vorstehend mindestens eine Rippe (28, 29) zu seiner Einhakung an einer Klammer (30) aufweist.

7. Umhüllungskanal nach Anspruch 6, dadurch gekennzeichnet, daß das durchgehende Profilelement (18) in der Abstufung (27), die es bildet, vorstehend zwei Rippen (28, 29) aufweist, deren eine (28) von einer einfachen schrägen Lamelle gebildet ist und deren andere (29) als Haken ausgebildet ist.

8. Umhüllungskanal nach einem der Ansprüche 1 bis 7, dadurch gekennzeichnet, daß die Außenwange (23) der getrennten Profilelemente (20) allgemein eben ist und sich im wesentlichen in der Hauptebene des durchgehenden Profilelements (18) erstreckt.

9. Umhüllungskanal nach einem der Ansprüche 1 bis 8, dadurch gekennzeichnet, daß die Innenwange (22) der getrennten Profilelemente (20) allgemein gekrümmt ist, wobei ihre Konkavität dem Inneren der Seitenkammer (17) zugewandt ist.

10. Umhüllungskanal nach einem der Ansprüche 1 bis 9, dadurch gekennzeichnet, daß die getrennten Profilelemente (20) an der Verbindung ihrer Wangen (22, 23) eine zur Hauptebene des durchgehenden Profilelements (18) schräge Mittelfacette (46) aufweisen, auf deren Außenfläche vorstehend eine Rippe (48) für ihr Einrasten auf dem durchgehenden Profilelement (18) vorgesehen ist.

11. Umhüllungskanal nach Anspruch 10, dadurch gekennzeichnet, daß die getrennten Profilelemente (20) auf der Innenfläche ihrer Mittelfacette (46) vertieft eine Nut (52) aufweisen.

12. Umhüllungskanal nach einem der Ansprüche 1 bis 11, dadurch gekennzeichnet, daß auf der Innenfläche der Wangen (22, 23) der getrennten Profilelemente (20) vorstehend verschiedene Rippen (54, 55, 56) vorgesehen sind.

13. Umhüllungskanal nach einem der Ansprüche 1 bis 12, dadurch gekennzeichnet, daß auf der Außenfläche der Innenwange (22) der getrennten Profilelemente (20) in einem Abstand voneinander vorstehend mindestens zwei Rippen (57, 58) für das eventuelle Einsetzen einer Zwischenwand (60) in die Mittelkammer (16) vorgesehen sind.

14. Umhüllungskanal nach einem der Ansprüche 1 bis 13, dadurch gekennzeichnet, daß die Außenwange (23) der getrennten Profilelemente (20) längs ihres freien Randes einen Wulst (64) mit allgemein kreisförmigem Querschnitt aufweist und das zugeordnete Verschlußelement (25) mit einer Nut (65) mit ergänzendem Querschnitt auf diesem Wulst (64) drehbar eingerastet ist.

15. Umhüllungskanal nach Anspruch 14, dadurch gekennzeichnet, daß das Verschlußelement (25) der Seitenkammer (17) ebenfalls auf der Innenwange (22) der getrennten Profilelemente (20) längs deren freiem Rand eingerastet ist.

16. Umhüllungskanal nach einem der Ansprüche 1 bis 15, dadurch gekennzeichnet, daß eines der getrennten Profilelemente (20) innen mit mindestens einem Halter (84) ausgerüstet ist, der sich in diesem quer erstreckt.

17. Umhüllungskanal nach den Ansprüchen 12 und 16 zusammen, dadurch gekennzeichnet, daß der Halter (84) für seinen Halt mit mindestens einer Nut (54, 55, 56) des getrennten Profilelements (20) in Eingriff ist.

18. Umhüllungskanal nach Anspruch 17, dadurch gekennzeichnet, daß der Halter (84) auf seiner Schmalkante vorstehend mindestens einen elastisch verformbaren Lappen (86) besitzt, mit dem er mit einer Rippe (55) des getrennten Profilelements (20) in Eingriff ist.

19. Umhüllungskanal nach den Ansprüchen 11 und 16 zusammen, dadurch gekennzeichnet, daß der Halter (84) seitlich mindestens einen Lappen (89) aufweist, über den er an der Mittelfacette (46) des getrennten Profilelements (20) angebracht werden kann.

20. Umhüllungskanal nach einem der Ansprüche 1 bis 19, dadurch gekennzeichnet, daß die Verschlußmittel (24) der Mittelkammer (16) einerseits längs des der Seitenkammer (17) entgegengesetzten Längsrandes des durchgehenden Profilelements (18) mindestens zwei getrennte Profilelemente (20) aufweist, die eine zweite Seitenkammer (17) abgrenzen, und andererseits mindestens ein Verschlußelement (26), das zwischen den getrennten Profilelementen (20) der ersten Seitenkammer (17) und denen der zweiten Seitenkammer (17) vorgesehen ist und das an den Innenwangen (22) dieser getrennten Profilelemente (20) angebracht ist.

21. Umhüllungskanal nach Anspruch 20, dadurch gekennzeichnet, daß die beiden Seitenkammer (17) zueinander symmetrisch sind.

22. Umhüllungskanal nach einem der Ansprüche 20, 21, dadurch gekennzeichnet, daß längs mindestens einem der Längsränder des Verschlußelements (26) der Mittelkammer (16) eine Fugenabdeckung (76) angebracht ist, die sich in Querrichtung von diesem Verschlußelement (26) zu dem Verschlußelement (25) der nahe gelegenen Seitenkammer (17) erstreckt.

23. Umhüllungskanal nach einem der Ansprüche 1 bis 22, dadurch gekennzeichnet, daß er getrennt horizontal verwendet wird.

24. Umhüllungskanal nach einem der Ansprüche 1 bis 12, dadurch gekennzeichnet, daß ihm für die Versetzung mindestens eines elektrischen Blocks (105) ein zusätzlicher Umhüllungskanal (118) vom selben Typ T-artig hinzugefügt ist, der sich vertikal erstreckt und dessen Innenvolumen mit seinem eigenen Innenvolumen in Verbindung ist.

## Claims

1. A casing, in particular for a hospital establishment, of the kind formed by profile elements longitudinally defining in side-by-side relationship at least two compartments, namely a compartment referred to hereinafter as the central compartment (16) and a compartment referred to hereinafter as the lateral compartment (17), characterised in that it comprises in combination on the one hand for the central compartment (16) at least one continuous profile element (18) which extends over its entire length and which forms a base for said central compartment (16) and on the other hand for the lateral compartment (17) at least two separate profile elements (20) which are fitted on to the continuous profile element (18) along one of the longitudinal edges thereof and which, both of the same profile, each have two limbs (22, 23), namely an internal limb (22) on the side of the continuous profile element (18) and an external limb (23) on the opposite side to the foregoing, co-operating, for the central compartment (16), with closure means (24) which, operative between the internal limb (22) of the separate profile elements (20) of the lateral compartment (17) and the other of the longitudinal edges of the continuous profile element (18), delimit with said separate profile elements (20) and said continuous profile element (18) the central compartment (16) and, for the lateral compartment (17), at least one closure element (25) which, fitted on to the limbs (22, 23) of the separate profile elements (20) of said lateral compartment (17), from one to the other of said limbs (22, 23), delimits with said limbs (22, 23) said lateral compartment (17).

2. A casing according to claim 1 characterised in that, along a longitudinal edge, the continuous profile element (18) comprises a groove (35) for latching engagement of the separate profile elements (20) of the lateral compartment (17).

3. A casing according to claim 2 characterised in that said groove (35) is generally inclined at 45° with respect to the general plane of the continuous profile element (18).

4. A casing according to any one of claims 1 to 3 characterised in that the continuous profile element (18) has in projecting relationship on its internal surface in the central zone thereof a rib (38) of T-shaped cross-section.

5. A casing according to claim 4 characterised in that the two lateral limbs (40) of said rib (38) are separated from each other by a groove (48).

6. A casing according to any one of claims 1 to 5 characterised in that in its central zone at least the continuous profile element (18) forms in recessed relationship with respect to its external surface an opening (27) and in said opening (27) it has in projecting relationship at least one rib (28, 29) for hooking engagement thereof on a clip (30).

7. A casing according to claim 6 characterised in that in the opening (27) that it forms the continuous profile element (18) has in projecting relationship two ribs (28, 29), one (28) formed by a simple inclined bar portion and the other (29) being shaped as a hook.

8. A casing according to any one of claims 1 to 7 characterised in that the external limb (23) of the separate profile elements (20) is generally flat and extends substantially in the general plane of the continuous profile element (18).

9. A casing according to any one of claims 1 to 8 characterised in that the internal limb (22) of the separate profile elements (20) is generally curved, with its concavity directed towards the interior of the lateral compartment (17).

10. A casing according to any one of claims 1 to 9 characterised in that, at the connection of their limbs (22, 23), the separate profile elements (20) comprise a central face (46) which is inclined with respect to the general plane of the continuous profile element (18) with, in projecting relationship on the external surface of said central face (46), a rib (48) for latching engagement thereof on to the continuous profile element (18).

11. A casing according to claim 10 characterised in that the separate profile elements (20) comprise in recessed relationship on the internal surface of their central face (46) a groove (52).

12. A casing according to any one of claims 1 to 11 characterised in that various ribs (54, 55, 56) are operatively disposed in projecting relationship on the internal surface of the limbs (22, 23) of the separate profile elements (20).

13. A casing according to any one of claims 1 to 12 characterised in that operatively disposed in projecting relationship at a spacing from each other on the external surface of the internal limb (22) of the separate profile elements (20) are at least two ribs (57, 58) for the optional fitting of a partition (60) in the central compartment (16).

14. A casing according to any one of claims 1 to 13 characterised in that the external limb (23) of the separate profile elements (20) comprises along its free edge a bead (64) of generally circular cross-section and by way of a groove (65) of complementary cross-section the associated closure element (25) is rotatably latched on to said bead (64).

15. A casing according to claim 14 characterised in that the closure element (25) of the lateral compartment (17) is also latched on to the internal limb (22) of the separate profile elements (20) along the free edge thereof.

16. A casing according to any one of claims 1 to 15 characterised in that one of the separate profile elements (20) is internally provided with at least one support (84) which extends transversely with respect thereto.

17. A casing according to claims 12 and 16 in combination characterised in that for holding it said support (84) is engaged with at least one rib (54, 55, 56) of the separate profile element (20).

18. A casing according to claim 17 characterised in that the support (84) has in projecting relationship on its edge at least one elastically deformable lug (86) by way of which it is engaged with a rib (55) of the separate profile element (20).

19. A casing according to claims 11 and 16 in combination characterised in that the support (84) laterally comprises at least one lug (89) by way of which it can be secured to the central face (46) of the separate profile element (20).

20. A casing according to any one of claims 1 to 19 characterised in that the closure means (24) of the central compartment (16) comprise on the one hand along the longitudinal edge of the continuous profile element (18) which is opposite to the lateral compartment (17) at least two separate profile elements (20) which define a second lateral compartment (17) and on the other hand at least one closure element (26) which, operatively disposed between the separate profile elements (20) of the first lateral compartment (17) and those of the second lateral compartment (17), is fitted on to the internal limbs (22) of said separate profile elements (20).

21. A casing according to claim 20 characterised in that the two lateral compartments (17) are symmetrical with respect to each other.

22. A casing according to either one of claims 20 and 21 characterised in that along one at least of the longitudinal edges of the closure element (26) of the central compartment (16) is fitted a cover bar (76) which extends transversely from said closure element (26) to the closure element (25) of the adjacent lateral compartment (17).

23. A casing according to any one of claims 1 to 22 characterised in that it is used in isolation horizontally.

24. A casing according to any one of claims 1 to 12 characterised in that, for the offset positioning of at least one electrical unit (105) there is added thereto in T-shaped relationship an auxiliary casing (118) of the same type which extends vertically and the internal volume of which communicates with its own internal volume.
